(19) Europäisches Patentamt / European Patent Office / Office européen des brevets

(11) **EP 3 819 365 A1**

(12) **EUROPEAN PATENT APPLICATION**
published in accordance with Art. 153(4) EPC

(43) Date of publication:
**12.05.2021 Bulletin 2021/19**

(51) Int Cl.:
***C12J 1/04*** *(2006.01)*

(21) Application number: **19830310.9**

(86) International application number:
**PCT/JP2019/025520**

(22) Date of filing: **27.06.2019**

(87) International publication number:
**WO 2020/008984 (09.01.2020 Gazette 2020/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2018 JP 2018126158**

(71) Applicant: **Mizkan Holdings Co., Ltd.**
**Handa-shi, Aichi 475-8585 (JP)**

(72) Inventors:
• **HIBI Naruhiro**
  **Handa-shi, Aichi 475-8585 (JP)**
• **OGASAWARA Yasushi**
  **Handa-shi, Aichi 475-8585 (JP)**
• **NAKAYAMA Takuya**
  **Handa-shi, Aichi 475-8585 (JP)**

(74) Representative: **Mewburn Ellis LLP**
**Aurora Building**
**Counterslip**
**Bristol BS1 6BX (GB)**

(54) **FERMENTED-CELLULOSE-CONTAINING VINEGAR AND PRODUCTION METHOD THEREOF**

(57) An object of the present invention is to provide a method of producing vinegar in which acidity in terms of acetic acid is decreased. According to the present invention, provided is a method of producing vinegar containing fermented cellulose and acetic acid, the method comprising: step 1 of conducting fermentation allowing an acetic acid bacterium to mainly produce fermented cellulose under fermentation condition (A) below; and step 2 of conducting fermentation allowing the acetic acid bacterium to mainly produce acetic acid under fermentation condition (B) below. Fermentation condition (A): acidity X in terms of acetic acid and ethanol concentration Y in a medium at the start of fermentation satisfy formula (I) below:

$$0 < X + Y < 4.0 \quad (I).$$

In the formula, X represents acidity in terms of acetic acid (% (w/v)), and Y represents ethanol concentration (% (v/v)). Fermentation condition (B): ethanol concentration in fermentation liquid is controlled during fermentation to be more than 0% (v/v) and less than 4% (v/v).

EP 3 819 365 A1

**Description**

Technical Field

The present invention relates to fermented cellulose-containing vinegar in which acid taste of acetic acid is decreased and to a production method thereof.

Background Art

Fermented cellulose produced by acetic acid bacteria (bacterial cellulose) has network structure of extremely thin fibers which are 1/100 to 1/1000 the thickness of plant-derived cellulose, and this network structure exhibits excellent heat resistance, salt resistance, and acid resistance; therefore, fermented cellulose has recently attracted attention as new material in various industrial fields. In a food field, suspension of fermented cellulose has a dispersion stabilizing action, a suspending action, thickening action, emulsion stabilizing action, and the like superior to conventionally known water-soluble polysaccharides and is therefore utilized as a dispersion stabilizer, an emulsion stabilizer, a thickening agent, and the like.

Fermented cellulose is known to vary in structure and physical properties depending on different cultural methods such as stirring cultivation and stationary cultivation and on different additive components for culture media. In addition, when fermented cellulose is utilized in the food field described above, utilization of carboxymethyl cellulose (hereinafter described as "CMC") is proposed so as to improve dispersibility of the fermented cellulose itself into liquid and to improve the dispersion stabilizing effect on another insoluble solid component into liquid. For example, Patent Literature 1 has reported obtaining fermented cellulose having high dispersibility in water by cultivating a strain of *Gluconacetobacter intermedius* under aeration and stirring in a medium containing CMC. In addition, Patent Literature 2 discloses a dispersion stabilizing composition for food subjected to non-heating sterilization, the composition containing fermented cellulose and an alkali salt of CMC. Furthermore, Patent Literature 3 discloses a dispersion stabilizing method for an insoluble substance in an insoluble substance-containing beverage, the method including adding a sodium salt of CMC and fermented cellulose into an insoluble substance-containing beverage. However, since it is difficult to remove CMC dispersed in network structure of fermented cellulose, after fermentation, from such food utilizing fermented cellulose, labeling of CMC as a food additive is required, and preference of consumers decreases.

On the other hand, since vinegar obtained by usual acetic acid fermentation has peculiar strong acid taste, various attempts such as a method of adding a sweetener with high sweetness (Patent Literature 4) and a method for decreasing sharpness of vinegar by using a sugar alcohol such as reduced starch syrup (Patent Literature 5) as methods for decreasing acid taste have been made in the past. However, an effect of decreasing acid taste was not sufficiently obtained, taste and flavor of added substances themselves are transferred to food and drink to decrease preference, and other problems have arisen.

Citation List

Patent Literature

Patent Literature 1: WO2014-104318
Patent Literature 2: JP Patent Publication (Kokai) No. 11-178516 A (1999)
Patent Literature 3: JP Patent Publication (Kokai) No. 2009-278970 A
Patent Literature 4: JP Patent Publication (Kokai) No. 10-215793 A (1998)
Patent Literature 5: JP Patent Publication (Kokai) No. 2004-89119 A

Summary of Invention

Technical Problem

An object of the present invention is to provide a method of producing vinegar in which acid taste of acetic acid is decreased.

Solution to Problem

The present inventors conducted intensive studies to solve the above-described object. As a result, the present inventors have found that vinegar in which acid taste of acetic acid is decreased is obtained by cultivating an acetic acid bacterium producing fermented cellulose under specific fermentation conditions and that while the vinegar is fluent liquid, the vinegar retains a dispersion stabilizing effect on an insoluble solid component exerted by fermented cellulose, has natural fibrous texture and white turbidity, and therefore can be provided as an unconventional new type of food material, and the present invention has been completed thereby.

That is, the present invention encompasses the following inventions.

(1) A method of producing vinegar containing fermented cellulose and acetic acid, the method comprising: step 1 of conducting fermentation allowing an acetic acid bacterium to mainly produce fermented cellulose under fermentation condition (A) below; and step 2 of conducting fermentation allowing the acetic acid bacterium to mainly produce acetic acid under fermentation condition (B) below:
fermentation condition (A): acidity X in terms of acetic acid and ethanol concentration Y in a medium at the start of fermentation satisfy formula (I) below:

$$0 < X + Y < 4.0 \quad (\text{I})$$

wherein, X represents acidity in terms of acetic acid (% (w/v)), and Y represents ethanol concentration (% (v/v)); and
fermentation condition (B): ethanol concentration in fermentation liquid is controlled during fermentation to be more than 0% (v/v) and less than 4% (v/v).

(2) The method of producing vinegar according to (1), wherein a content of the acetic acid is 4% (w/v) or more and 20% (w/v) or less relative to acidity in terms of acetic acid.
(3) The method of producing vinegar according to (1) or (2), wherein a content of the fermented cellulose is 0.32% (w/v) or more and 4.5% (w/v) or less relative to dry weight.
(4) The method of producing vinegar according to any one of (1) to (3), wherein the vinegar comprises bacterial cells of the acetic acid bacterium.
(5) The method of producing vinegar according to any one of (1) to (4), further comprising a step of concentrating fermented cellulose between the step 1 and the step 2.
(6) The method of producing vinegar according to any one of (1) to (5), further comprising a step of crushing fermented cellulose so that the fermented cellulose in the vinegar satisfies requirements below:

(a) a transmittance of a liquid in which a content of fermented cellulose is adjusted to be 0.1% (w/v) (dry weight) by diluting the vinegar is 0.1% or more and 20% or less at a wavelength of 500 nm; and
(b) a 90% cumulative particle diameter ($D_{90}$ diameter), as measured by a laser diffraction particle size distribution analyzer, of fermented cellulose in a liquid in which a content of fermented cellulose is adjusted to be 0.1% (w/v) (dry weight) by diluting the vinegar is 300 $\mu$m or more and 1000 $\mu$m or less.

(7) The method of producing vinegar according to any one of (1) to (6), further comprising a step of crushing fermented cellulose so that fermented cellulose in the vinegar satisfies requirements below:

(c) a storage modulus G', as measured by dynamic viscoelasticity measurement at a temperature of 20°C and an angular frequency, of 1 rad/s of a liquid in which a content of fermented cellulose is adjusted to be 0.1% (w/v) (dry weight) by diluting the vinegar is 10 Pa or more and $10^3$ Pa or less; and
(d) a storage modulus G', as measured by dynamic viscoelasticity measurement at a temperature of 20°C and an angular frequency of 10 rad/s, of a liquid in which a content of fermented cellulose is adjusted to be 0.1% (w/v) (dry weight) by diluting the vinegar is 0.1 times or more and 10 times or less of a storage modulus G', as measured at a temperature of 20°C and an angular frequency of 1 rad/s.

(8) The method of producing vinegar according to any one of (1) to (7), wherein the vinegar contains no carboxymethyl cellulose.
(9) Vinegar containing fermented cellulose and acetic acid, wherein a content of the fermented cellulose is 0.32% (w/v) or more and 4.5% (w/v) or less relative to dry weight, and a content of the acetic acid is 4% (w/v) or more and 20% (w/v) or less relative to acidity in terms of acetic acid.
(10) The vinegar according to (9), comprising bacterial cells of an acetic acid bacterium.
(11) The vinegar according to (9) or (10), wherein the fermented cellulose in the vinegar is dispersed therein so as to satisfy requirements below:

(a) a transmittance of a liquid in which a content of fermented cellulose is adjusted to be 0.1% (w/v) (dry weight) by diluting the vinegar is 0.1% or more and 20% or less at a wavelength of 500 nm; and
(b) a 90% cumulative particle diameter ($D_{90}$ diameter), as measured by a laser diffraction particle size distribution analyzer, of fermented cellulose in a liquid in which a content of fermented cellulose is adjusted to be 0.1% (w/v) (dry weight) by diluting the vinegar is 300 $\mu$m or more and 1000 $\mu$m or less.

(12) The vinegar according to any one of (9) to (11), wherein the fermented cellulose in the vinegar is dispersed therein in the vinegar so as to satisfy requirements below:

(c) a storage modulus G', as measured by dynamic viscoelasticity measurement at a temperature of 20°C and an angular frequency of 1 rad/s, of a liquid in which a content of fermented cellulose is adjusted to be 0.1% (w/v) (dry weight) by diluting the vinegar is 10 Pa or more and $10^3$ Pa or less; and
(d) a storage modulus G', as measured by dynamic viscoelasticity measurement at a temperature of 20°C and an angular frequency of 100 rad/s, of a liquid in which a content of fermented cellulose is adjusted to be 0.1% (w/v) (dry weight) by diluting the vinegar is 0.1 times or more and 10 times or less of a storage modulus G', as measured at a temperature of 20°C and an angular frequency of 1 rad/s.

(13) The vinegar according to any one of (9) to (12), containing no carboxymethyl cellulose.
(14) Vinegar-containing food and drink comprising vinegar produced by the production method according to any one of (1) to (8).
(15) Vinegar-containing food and drink comprising the vinegar according to any one of (9) to (13).
(16) A method for reducing acid taste of vinegar, comprising: in vinegar containing fermented cellulose and acetic acid, setting a content of the fermented cellulose to 0.32% (w/v) or more and 4.5% (w/v) or less relative to dry weight; and setting a content of the acetic acid to 4% (w/v) or more and 20% (w/v) or less relative to acidity in terms of acetic acid.

The present application claims the priority of Japanese patent application No. 2018-126158 filed on July 2, 2018 and encompasses the contents described in the specification of the patent application.

Advantageous Effects of Invention

According to the present invention, vinegar in which acid taste of acetic acid is decreased can be produced while minimizing the use of components required to be labeled as food additives and often avoided by consumers. In addition, the vinegar of the present invention provides good dispersion stability of ingredients when ingredients are contained therein and has natural fibrous texture and white turbidity. Therefore, the vinegar of the present invention can be effectively utilized for producing various kinds of food and drink such as liquid seasonings and beverages.

Description of Embodiments

1. Method of producing fermented cellulose-containing vinegar

The method of producing vinegar according to the present invention includes: step 1 of conducting fermentation allowing an acetic acid bacterium to mainly produce fermented cellulose under fermentation condition (A); and step 2 of conducting fermentation allowing the acetic acid bacterium to mainly produce acetic acid under fermentation condition (B). Each step will be described below.

(Step 1)

In step 1, fermentation allowing an acetic acid bacterium to mainly produce fermented cellulose is conducted. This fermentation is conducted so as to satisfy fermentation condition (A): acidity X in terms of acetic acid and ethanol concentration Y in a medium at the start of fermentation satisfy formula (I) below.

$$0 < X + Y < 4.0 \quad (I)$$

(In the formula, X represents acidity in terms of acetic acid (% (w/v)), and Y represents ethanol concentration (% (v/v)).)

In formula (I) above, X + Y preferably satisfies 0.2 < X + Y < 4.0 and more preferably satisfies 0.5 < X + Y < 3.5 from the view point of optimizing the content of fermented cellulose.

While the acetic acid bacterium used in fermentation of step 1 may be any bacterial species, acetic acid bacteria belonging to *Komagataeibacter, Gluconacetobacter,* and *Acetobacter* are preferable; acetic acid bacteria belonging to *Komagataeibacter xylinus, Gluconacetobacter Entanii,* and *Gluconacetobacter Oboediens* are more preferable; and acetic acid bacteria belonging to *Komagataeibacter xylinus* are still more preferable. Preferable specific examples of the acetic acid bacteria belonging to *Komagataeibacter xylinus* include *Komagataeibacter xylinus* MZ-1061. This strain is deposited as an international deposition with the National Institute of Technology and Evaluation (NITE), Patent Microorganisms Depositary (NPMD) (2-5-8-122, Kazusa Kamatari, Kisarazu-shi, Chiba-ken, Japan, postal code: 292-0818), under Accession No. NITE BP-02749 (identification: MZ-1061) on June 20, 2018.

A medium to which components generally utilized as fermentation nutrient sources for acetic acid bacteria are added, and acetic acid and ethanol are added so that acidity in terms of acetic acid and ethanol concentration in the medium at the start of fermentation satisfy formula (I) above can be used as a medium used in step 1, with examples of the components including an inorganic nitrogen source such as an ammonium salt and nitrate salt; an organic nitrogen source such as a yeast extract, peptone, and tryptone; a mineral salt such as a magnesium salt; and a saccharide such as glucose, fructose, maltose, and sucrose. In addition, a medium to which agricultural material approved for use in brewed vinegar defined by Vinegar Quality Labeling Standard is added as an organic nutrient source, and acetic acid and ethanol are added so that acidity in terms of acetic acid and ethanol concentration in the medium at the start of fermentation satisfy formula (I) above can also be used, with the agricultural material including juices derived from vegetable and fruit such as apple juice, orange juice, grape juice, strawberry juice, tomato juice, and onion juice; cereals such as rice and wheat; and cereal products such as *sake* lees.

In the present invention, it is preferable that components derived from food are added as acetic acid and ethanol used, for example, brewed vinegar for acetic acid and fermented ethanol or the like for ethanol, in order to enable produced vinegar to be labeled as brewed vinegar and to reduce the number of components required to be labelled as food additives as much as possible. Brewed vinegar herein refers to vinegar produced using grains such as rice or wheat or fruit juice as a raw material, and examples thereof include grain vinegar (rice vinegar, brown rice vinegar, black vinegar, *sake* lees vinegar, malt vinegar, adlay vinegar, soybean vinegar, etc.); fruit vinegar (apple vinegar, grape vinegar, lemon vinegar, *kabosu* vinegar, *ume* vinegar, wine vinegar, balsamic vinegar, etc.); and alcoholic vinegar produced by acetic acid fermentation using ethanol as a raw material.

In step 1, while any of aerated stirring fermentation, stationary fermentation, and shaking fermentation may be employed as a fermentation method, stationary fermentation is preferable because yields of fermented cellulose are good. Fermentation is preferably continued until the content of fermented cellulose in fermentation liquid becomes 0.32% (w/v) or more and 4.5% (w/v) or less, preferably 0.32% (w/v) or more and 4.1% (w/v) or less, more preferably 0.35% (w/v) or more and 3.0% (w/v) or less, and still more preferably 0.4% (w/v) or more and 0.7% (w/v) or less relative to dry weight from the view point of optimizing the production rate of fermented cellulose to effectively produce fermented cellulose. However, fermentation is usually terminated after a lapse of about two weeks and preferably about ten days.

(Step 2)

In step 2, fermentation allowing the acetic acid bacterium to mainly produce acetic acid is conducted. This fermentation is conducted so as to satisfy fermentation condition (B): ethanol concentration in fermentation liquid is controlled during fermentation to be more than 0% (v/v) and less than 4% (v/v).

The ethanol concentration in fermentation liquid is preferably controlled to be more than 0.5% (v/v) and 3.54% (v/v) or less and more preferably more than 1% (v/v) and 3% (v/v) or less from the view point of optimizing the production rate of acetic acid. The phrase "control the ethanol concentration in fermentation liquid" herein means measuring the ethanol concentration over time and adding ethanol as needed, for example, so that a time during which the ethanol concentration in fermentation liquid is lower than the above control value becomes 24 hours at maximum. While measurement of ethanol concentration may be carried out by any measurement method, a part of fermentation liquid may be collected, and gas chromatography (for example, GC-2014 manufactured by SHIMADZU CORPORATION) may be used thereon, for example.

As ethanol added during fermentation, it is preferable to add a component derived from food such as fermented ethanol in order to enable produced vinegar to be labeled and sold as brewed vinegar and in order to reduce the number of components required to be labelled as food additives as much as possible.

Examples of a medium used in step 2 can include a medium to which a fermentation nutrient source for the acetic acid bacterium is individually added and a medium including agricultural material approved for use in brewed vinegar defined by Vinegar Quality Labeling Standard as in the case of step 1.

In step 2, while any of aerated stirring fermentation, stationary fermentation, and shaking fermentation may be employed as a fermentation method, shaking fermentation or aerated stirring fermentation is preferable because yields of acetic acid are good. Fermentation in step 2 is preferably continuously carried out until the content of acetic acid in fermentation liquid exceeds at least 4% (w/v), usually for about three weeks, more preferably about two weeks, and still more preferably about one week.

In the method of producing the present invention, the content of fermented cellulose in fermentation liquid may be increased by concentrating the fermentation liquid after step 1. While a concentration method is not particularly limited, examples thereof include conventionally known methods such as pressurized concentration, evaporation concentration, membrane concentration, and freeze concentration.

Step 1 is preferably carried out prior to step 2 so as to prevent pH of fermentation liquid from being excessively decreased due to highly concentrated acetic acid. In addition, since when the concentration of fermented cellulose produced in step 1 is high, fermentation liquid gels to cause production of acetic acid in step 2 to be delayed, it is preferable that fermented cellulose produced in step 1 is crushed to be dispersed in fermentation liquid before entering step 2. In addition, when the concentration of fermented cellulose is high, crushing of fermented cellulose may be carried out both before entering step 2 and after step 2.

Any method of crushing fermented cellulose can be employed as long as fermented cellulose is enabled to disperse in fermentation liquid. The crushing method may be a method carrying out crushing by hand or may be a method using a machine such as a ball mill, roll mill, colloid mill, Star Burst, homogenizer, and sonicator; however, a homogenizer or a sonicator is preferably used so as to crush fermented cellulose into an appropriate size. Examples of the homogenizer include Physcotron NS-52 (manufactured by Microtec Co., Ltd.), and examples of the sonicator include Sonifier 450 (manufactured by Branson Ultrasonics, Emerson Japan, Ltd.)

2. Fermented cellulose-containing vinegar

In the vinegar of the present invention, a content of the fermented cellulose is 0.32% (w/v) or more and 4.5% (w/v) or less relative to dry weight, and a content of acetic acid is 4% (w/v) or more and 20% (w/v) or less relative to acidity in terms of acetic acid. In addition, it is preferable that the vinegar of the present invention contains no CMC. When CMC is contained, expected fibrous texture and white turbidity are hard to be obtained, and CMC is required to be labeled as a food additive, resulting in decrease of preference of consumers, which is not preferable.

(Fermented cellulose)

While the content of fermented cellulose in the vinegar of the present invention may be 0.32% (w/v) or more and 4.5% (w/v) or less relative to dry weight, the content is preferably 0.32% (w/v) or more and 4.1% (w/v) or less, more preferably 0.35% (w/v) or more and 3.0% (w/v) or less, and still more preferably 0.4% (w/v) or more and 0.7% (w/v) or less from the view point of suppressing the influence on production efficiency of fermented cellulose and on acetic acid fermentation and the view point of obtaining natural fibrous texture and white turbidity. Incidentally, the content of fermented cellulose in the present invention refers to a value calculated, after measuring a weight of fermented cellulose in a dried state, by dividing the measured weight by an original amount of fermentation liquid.

The fermented cellulose in the vinegar of the present invention may be any type of cellulose as long as it is produced by an acetic acid bacterium. In addition, the fermented cellulose may be a purified product or an unpurified product. However, an unpurified product is preferable because bacterial cells of an acetic acid bacterium which contain a component having a high nutritional value such as ceramide can be taken together.

When the vinegar of the present invention is produced by the production method of the present invention described above, fermented cellulose produced in step 1 described above using an acetic acid bacterium may be directly used, or the fermented cellulose may be concentrated after step 1 to increase the content thereof in fermentation liquid.

In the present invention, measurement of the content of fermented cellulose in vinegar can be carried out by the following method, for example. First, fermented cellulose is washed with deionized water, and 1% (w/v) sodium hydroxide is added thereto followed by treatment in a hot-water bath at 80°C for two hours to decompose and remove bacterial cells, and the solvent is substituted with deionized water until being neutralized. The purified fermented cellulose is dried in a drier at 60°C to obtain completely dried cellulose. A value obtained by measuring, with a microbalance, the weight of the fermented cellulose having been subjected to the above-described purification and drying operation is divided by an amount of fermentation liquid contained before drying to calculate a fermented cellulose content.

(Acidity in terms of acetic acid)

While the content of acetic acid in the vinegar of the present invention may be 4% (w/v) or more and 20% (w/v) or less relative to acidity in terms of acetic acid, the content is preferably 4% (w/v) or more and 15% (w/v) or less and more preferably 4% (w/v) or more and 10% (w/v) or less so as to effectively exert an effect of decreasing acid taste.

In the vinegar of the present invention, a method for allowing acetic acid to be contained in the vinegar may be any of a method for allowing acetic acid to be contained through fermentation by an acetic acid bacterium and a method of adding separately produced brewed vinegar into fermented cellulose. However, fermentation by an acetic acid bacterium enables bacterial cells of the acetic acid bacterium growing associated with fermentation to be contained without change.

It is preferable that the vinegar of the present invention is produced so as to satisfy the standard of brewed vinegar defined by Vinegar Quality Labeling Standard. Furthermore, it is more preferable that the vinegar of the present invention is produced so as to satisfy the standard of brewed vinegar defined by Japanese Agricultural Standards because vinegar which is capable of being labelled as brewed vinegar and has dispersion stability and in which acid taste of acetic acid is suppressed can be provided. Incidentally, brewed vinegar defined by Vinegar Quality Labeling Standard refers to brewed vinegar in accordance with Ministry of Agriculture, Forestry and Fisheries Notification No. 1668 dated December 19, 2000, last amended by Consumer Affairs Agency Notification No. 8 dated August 31, 2011, and brewed vinegar defined by Japanese Agricultural Standards refers to brewed vinegar in accordance with Ministry of Agriculture, Forestry and Fisheries Notification No. 801 dated June 8, 1979, last amended by Ministry of Agriculture, Forestry and Fisheries Notification No. 1506 dated October 16, 2008.

In the present invention, any measurement method capable of measuring acidity set forth for brewed vinegar defined by Japanese Agricultural Standards can be employed for measurement of acidity in terms of acetic acid. For example, acidity in terms of acetic acid can be measured by a method in which a specimen is titrated with 0.5 M sodium hydroxide standard solution using automatic titrator COM-1600 (HIRANUMA SANGYO Co., Ltd.).

(Bacterial cells of acetic acid bacterium)

In the vinegar of the present invention, bacterial cells of the acetic acid bacterium are preferably contained in an amount of 1% (w/v) or more and 5% (w/v) or less and more preferably 2% (w/v) or more and 5% (w/v) or less relative to wet weight from the view point of achieving both optimization of production efficiency of bacterial cells of the acetic acid bacterium during fermentation and increase of the content of a component having a high nutritional value such as ceramide. In the vinegar of the present invention, since almost of the solid matter remaining after removing fermented cellulose is considered as bacterial cells of the acetic acid bacterium, the content of bacterial cells of the acetic acid bacterium can be measured by measuring an amount of the remaining solid matter by a microbalance after the vinegar is neutralized by sodium hydroxide or the like and then fermented cellulose is decomposed by a cellulase (for example, Celluclast manufactured by Novozymes Japan Ltd.), for example.

(Dynamic viscoelasticity)

In the vinegar of the present invention, a storage modulus G', as measured by dynamic viscoelasticity measurement at a temperature of 20°C and an angular frequency of 1 rad/s, of a liquid in which the content of fermented cellulose is adjusted to be 0.1% (w/v) (dry weight) by diluting the vinegar is preferably 10 Pa or more and $10^3$ Pa or less and more preferably 50 Pa or more and $10^3$ Pa or less. When the storage modulus G' falls within the above range, good dispersion stability is obtained.

In addition, in order to obtain better dispersion stability, the storage modulus G', as measured by dynamic viscoelasticity measurement at a temperature of 20°C and an angular frequency of 10 rad/s, of a liquid in which the content of fermented cellulose is adjusted to be 0.1% (w/v) (dry weight) by diluting the vinegar is preferably 0.1 times or more and 10 times or less and more preferably 0.5 times or more and 10 times or less of a storage modulus G', as measured at a temperature of 20°C and an angular frequency of 1 rad/s.

In the present invention, a value measured by any device can be employed as the storage modulus G' as long as the value is measured under the conditions where temperature is 20°C (constant), control distortion is 0.1%, and geometry is parallel-cone type (diameter: 50 mm, cone angle: 1.0°). Examples of the measurement device include Modular Compact Rheometer MCR 102 (manufactured by Anton Paar GmbH). In addition, it is appropriate that a sample is slowly dropped using a dropper so as not to break the structure thereof at the time of measurement, and the sample is measured within a linear region.

(Transmittance)

In the vinegar of the present invention, a transmittance of a liquid in which the content of fermented cellulose in the vinegar is adjusted to be 0.1% (w/v) relative to dry weight is preferably 0.1% or more and 20% or less, more preferably 1% or more and 20% or less, and still more preferably 1% or more and 10% or less at a wavelength of 500 nm. When the transmittance falls within the above range, good fibrous texture and white turbidity are obtained.

In the present invention, a value measured by any device can be employed as the transmittance at a wavelength of 500 nm as long as the value is measured under the conditions where a measurement wavelength is 500 nm, and measurement temperature is room temperature (20°C). Examples of the measurement device include UV Spectrophotometer UV-1800 (manufactured by SHIMADZU CORPORATION).

(Particle size distribution)

In the vinegar of the present invention, a 90% cumulative particle diameter ($D_{90}$ diameter), as measured by a laser diffraction particle size distribution analyzer, of fermented cellulose in a liquid in which the content of fermented cellulose is adjusted to be 0.1% (w/v) (dry weight) by diluting the vinegar is preferably 300 $\mu$m or more and 1000 $\mu$m or less and more preferably 500 $\mu$m or more and 800 $\mu$m or less. When the $D_{90}$ diameter falls within the above range, good fibrous texture and white turbidity are obtained.

The $D_{90}$ diameter in the vinegar of the present invention is defined as a particle diameter at which when a particle diameter distribution of the vinegar is split into two at a certain particle diameter, the ratio of a proportion of the cumulative value of particle frequencies% counted from the larger side to a proportion of the cumulative value of particle frequencies% counted from the smaller side is 1:9.

In the present invention, a laser diffraction particle size distribution analyzer such as Microtrac MT3300 EX II system from MicrotracBEL Corp. can be used for measurement of $D_{90}$. As a solvent for measurement, a solvent hardly affecting the structure of solid content in the vinegar is preferably used, and specifically, an aqueous solvent such as ion-exchanged water is preferably used. In addition, Data Management System version 2 (DMS2, MicrotracBEL Corp.) can be used as measurement application software. At the time of measurement, the washing button of the measurement application software is pressed down to perform washing, the Set-zero button of the software is then pressed down to perform zero adjustment, and a sample can be directly charged until an appropriate concentration range is met under sample loading. The sonication button of the software is pressed down to perform sonication at a frequency of 40 kHz and an output of 30 W for three minutes, deforming treatment is performed three times, and a result obtained after performing laser diffraction at a flow rate of 50% and measurement time of 10 seconds can be employed as a measured value.

Measurement can be conducted under the following conditions: display of distribution: volume, refractive index of particles: 1.60, refractive index of solvent: 1.3333, upper limit of measurement ($\mu$m) = 2000.00 $\mu$m, and lower limit of measurement ($\mu$m) = 0.021 $\mu$m.

3. Vinegar-containing food and drink

The vinegar of the present invention may be directly used as a product but may be provided as food and drink to which the vinegar is added. Examples of the food and drink containing vinegar can include a beverage (vinegar beverage) containing vinegar and a liquid seasoning containing vinegar (such as blended vinegar, *sushi* vinegar, *ponzu,* dressing, and *mentsuyu*)*,* for example. Especially, when the vinegar of the present invention is used for an ingredient-containing liquid seasoning packed in a hermetically sealed vessel, which contains ingredients usually precipitating in a seasoning such as mustard seeds, sesame, onion, carrot, mushroom, *konjac,* and deep-fried soybean curd, the ingredients are retained in liquid; therefore, unevenness of the amount of the ingredients per use of the seasoning is reduced, and an appearance of the seasoning is improved, which is preferable. an ingredient-containing liquid seasoning packed in a hermetically sealed vessel,

Examples

Hereinafter, the present invention will be more specifically described with Examples. However, the present invention is not limited thereto.

(Reference Example) Measurement method of components

In the following test examples, the fermented cellulose content, acidity in terms of acetic acid, ethanol concentration, and concentration of bacterial cells of an acetic acid bacterium in a sample were measured according to the following methods, respectively.

(1) Measurement of fermented cellulose content

Fermented cellulose in a sample was washed with deionized water, 1% (w/v) sodium hydroxide was added thereto followed by treatment in a hot-water bath at 80°C for two hours to decompose and remove bacterial cells, and the solvent was substituted with deionized water until being neutralized. The purified fermented cellulose was dried in a drier at 60°C for 24 hours to obtain completely dried fermented cellulose. A value obtained by measuring, with a microbalance (GR-202 manufactured by A&D Company, Limited), the weight of the fermented cellulose having been subjected to the above-described purification and drying operation was divided by the amount of fermentation liquid to calculate the fermented cellulose content.

(2) Measurement of acidity in terms of acetic acid

Neutralization titration with 0.5 M sodium hydroxide was conducted on 5 ml of a sample using automatic titrator COM-1600 (HIRANUMA SANGYO Co., Ltd.) until pH became 8.2, and the titration amount was subsequently converted to acidity in terms of acetic acid according to the following expression.

$$\text{Acidity in terms of acetic acid (\%) (w/v)} = 0.03 \times (T - B) \times F/V \times 100$$

T: titration amount of 0.5 mol/L sodium hydroxide standard solution in sample (ml)
B: titration amount of 0.5 mol/L sodium hydroxide standard solution in blank test (ml)
F: titer of 0.5 mol/L sodium hydroxide standard solution
V: sampled amount of sample (ml)

(3) Measurement of ethanol concentration

After 5 ml of a sample was put into a 100 ml volumetric flask, and 5 ml of acetone as an internal standard was further put thereinto, the volumetric flask was filled with deionized water up to 100 ml. The deionized water diluted solution obtained after filling up the volumetric flask was filtered with a 0.45 $\mu$m filter and then poured into a 2 ml vial to obtain an analysis sample. The analysis sample was set for gas chromatography (GC-2014 manufactured by SHIMADZU CORPORATION), 1 $\mu$l of the analysis sample was injected, and ethanol was detected by a flame ionizing type detector (FID) under the following measurement conditions.

<Measurement conditions>

Column: packed column (3.1 m)
Filler: PEG-1000, 25% Shimalite 60/80 BT (SHINWA CHEMICAL INDUSTRIES, LTD.)
Detector: FID, 150°C
Temperature: 105°C (7 min)-100°C/min-120°C (2 min)
Flow rate: 40 mL/min
Injection port temperature: 120°C
Injection amount: 1 $\mu$L

In addition, ethanol was detected under the same measurement conditions as described above using a deionized water diluted solution containing 0.25% (v/v) of ethanol as a standard and 0.25% (v/v) of acetone as an internal standard. The area value of the detected peak with respect to the analysis sample was compared with the area value of the same peak in the standard by an internal standard method to determine the quantity of ethanol in the analysis sample.

(4) Measurement of concentration of bacterial cells of acetic acid bacterium

To a plastic tube (manufactured by Falcon corporation) having a capacity of 50 ml was added 10 ml of a sample and the plastic tube was filled with deionized water up to 30 ml. Thereafter, the solution was neutralized with 1 M sodium hydroxide solution and centrifuged (5000 rpm, five minutes). Thereafter, to the precipitate remaining after discarding the supernatant was added 30 ml of deionized water for desalination followed by stirring with a vortex mixer and subsequent centrifugation (5000 rpm, five minutes). Furthermore, 30 ml of deionized water was added, and Celluclast (manufactured by Novozymes Japan Ltd.) was then added at a proportion of 1% with respect to the liquid amount followed by treatment with a shaking machine (room temperature, 180 min$^{-1}$). The treated substance was centrifuged (5000 rpm, five minutes), moisture attaching to the top of the precipitate was then sufficiently removed using a dropper and Kimtowel (R) (Nippon Paper Crecia Co., Ltd.), the weight of the precipitate was measured by a microbalance, and the concentration of bacterial cells of an acetic acid bacterium was calculated by dividing the weight by the original liquid amount (10 ml).

(Test Example 1) Study on fermentation conditions in step 1

Fermentation conditions in step 1 was studied using acetic acid bacterium *Komagataeibacter xylinus* MZ-1061 (hereinafter described as "MZ-1061") (NITE BP-02749). A medium in which AY medium (Table 2) was added to P2G medium (Table 1) in an amount of 10% (v/v) of P2G medium (P2G+AY medium) and in which acetic acid and ethanol were added in respective amounts shown in Table 3 was used (test sections 1-1 to 1-10).

[Table 1]

| P2G medium composition | |
|---|---|
| Meast powder PG (manufactured by Asahi Food & Healthcare Co., Ltd.) | 1.0 %(w/v) |
| Fructose | 7.0 %(w/v) |
| Filling up with deionized water to 1.0 L | |

[Table 2]

| AY medium composition | |
|---|---|
| $(NH_4)_2HPO_4$ | 24.6 g |
| $K_2HPO_4$ | 5.19 g |
| Meast powder PG (manufactured by Asahi Food & Healthcare Co., Ltd.) | 15.6 g |
| $MgSO_4 \cdot 7H_2O$ | 0.32 g |
| Filling up with deionized water to 1.0 L | |

Fermentation was conducted by putting 20 ml of the above-described P2G+AY medium in a square plastic container having a capacity of 180 ml, and inoculating MZ-1061 which had been precultured until OD660nm = 0.2 or more was satisfied so that the amount of MZ-1061 became 2% (v/v) of the liquid amount followed by stationary fermentation for nine days in an incubator set at 30°C.

The content of fermented cellulose in the obtained fermentation liquid was measured by the method of Reference Example (1). The content of fermented cellulose and the acidity X in terms of acetic acid and ethanol concentration Y in the medium at the start of fermentation are shown in Table 3.

[Table 3]

| Fermentation condition (A) | Test section 1-1 | Test section 1-2 | Test section 1-3 | Test section 1-4 | Test section 1-5 | Test section 1-6 | Test section 1-7 | Test section 1-8 | Test section 1-9 | Test section 1-10 |
|---|---|---|---|---|---|---|---|---|---|---|
| X:acidity in terms of acetic acid (at the start of fermentation) (%(w/v)) | 0 | 3.0 | 0 | 1.0 | 1.5 | 2.0 | 0.33 | 0.66 | 2.33 | 3.33 |
| Y:ethanol concentration (at the start of fermentation) (%(v/v)) | 0 | 0 | 3.0 | 2.0 | 1.5 | 1.0 | 0.166 | 0.33 | 1.16 | 1.66 |
| X+Y | 0 | 3.0 | 3.0 | 3.0 | 3.0 | 3.0 | 0.496 | 0.99 | 3.49 | 4.99 |
| Fermented cellulose content (%(w/v)) | 0.31 | 0.55 | 0.57 | 0.56 | 0.44 | 0.68 | 0.62 | 0.58 | 0.80 | 0.22 |

As shown in Table 3, with respect to test sections 1-2 to 1-9, in which fermentation was conducted under the condition (fermentation condition (A)) where the acidity X in terms of acetic acid and ethanol concentration Y in the medium at the start of fermentation satisfy a relationship of $0 < X + Y < 4.0$ (X: acidity in terms of acetic acid (% (w/v)), Y: ethanol concentration (% (v/v))), the content of fermented cellulose was 0.32% (w/v) or more. On the other hand, with respect to test section 1-1 and test section 1-10, in which the acidity X in terms of acetic acid and ethanol concentration Y in the medium at the start of fermentation did not satisfy the above relational expression, the content of fermented cellulose was less than 0.32% (w/v).

(Test Example 2) Study on fermentation conditions in step 2

Fermentation conditions in step 2 were studied using MZ-1061. First, fermentation of step 1 was conducted using MZ-1061. Fermentation was conducted by putting, in a square plastic container having a capacity of 180 ml, 20 ml of P2G+AY medium to which 2% (w/v) of acetic acid and 2% (v/v) of ethanol were added, and inoculating MZ-1061 which had been precultured until OD660nm = 0.2 or more was satisfied so that the amount of MZ-1061 became 2% (v/v) of the liquid amount followed by stationary fermentation for nine days in an incubator set at 30°C. As a result, 0.73% (w/v) of fermented cellulose was obtained in the fermentation liquid.

After completion of step 1, the obtained fermentation liquid was subjected to crushing processing using Physcotron NS-52 (20000 rpm, 10 sec) every 20 ml. Following crushing processing, fermentation of step 2 was conducted. Fermentation was conducted in a shaking incubator set at 30°C (30°C, 120 min$^{-1}$) by putting 150 ml of the fermentation liquid after crushing in a Sakaguchi flask having a capacity of 500 ml and using a medium to which acetic acid and ethanol were added in respective amounts shown in Table 4, and the fermentation was continued until acidity in terms of acetic acid in the fermentation liquid exceeded 4% (w/v) or until increase of acidity of acetic acid almost stopped or acidity in terms of acetic acid decreased. During fermentation of step 2, the ethanol concentration in the fermentation liquid was controlled for each test section to fall within a predetermined control value (test sections 2-1 to 2-4), and when the ethanol concentration fell below the control value, ethanol was supplemented to control the ethanol concentration during fermentation. The ethanol concentration was controlled by managing the ethanol concentration so that a time during which the ethanol concentration was lower than the control value became 24 hours at a maximum. During fermentation of step 2, the ethanol concentration in the fermentation liquid was measured by the method described in Reference Example (3).

Acidity in terms of acetic acid in the fermentation liquid was measured by the method described in Reference Example (2) at a time point at which a predetermined time (six days, ten days) had passed since fermentation started (at the time of completion of fermentation). Results are shown in Table 4.

[Table 4]

| Fermentation condition (B) | | | | | | | |
|---|---|---|---|---|---|---|---|
| | Test section 2-1 | | Test section 2-2 | Test section 2-3 | Test section 2-4 | | |
| Ethanol concentration (at the start of fermentation) (%(v/v)) | 0 | | 2.0 | 3.0 | 4.0 | | |
| Ethanol concentration (control value) (%(v/v)) | 0 | | 2.0 | 3.0 | 4.0 | | |
| Acidity in terms of acetic acid (at the start of fermentation) (%(w/v)) | 1.0 | | 1.0 | 1.0 | 1.0 | | |
| Fermentation time (day) | 6 | 10 | 6 | 6 | 6 | 10 | |
| Acidity in terms of acetic acid (at the completion of fermentation) (%(w/v)) | 0.47 | 0.28 | 5.44 | 5.99 | 3.25 | 3.33 | |

As shown in Table 4, with respect to test sections 2-2 and 2-3, in which fermentation was conducted under the condition (fermentation condition (B)) where the ethanol concentration in the fermentation liquid was controlled to be more than 0% (v/v) and less than 4% (v/v) during fermentation, acidity in terms of acetic acid exceeded 4% (w/v) after fermentation of 6 days. On the other hand, with respect to test sections 2-1 and 2-4, in which control was conducted beyond the range of fermentation condition (B), increase of acidity in terms of acetic acid almost stopped or acidity in terms of acetic acid decreased before acidity in terms of acetic acid at completion of fermentation reached 4% (w/v).

In addition, a part of the fermentation liquid obtained from fermentation of test-section 2-3 was collected, and the concentration of bacterial cells of the acetic acid bacterium was measured by the method of Reference Example (4). As a result, 2.7% (w/v) relative to wet weight of bacterial cells of the acetic acid bacterium were obtained.

(Test Example 3) Study on concentration treatment

A change in the fermented cellulose content in the fermentation liquid was investigated by concentrating the fermentation liquid after step 1. First, fermentation of step 1 was conducted using MZ-1061. Fermentation was conducted by preparing 30 square plastic containers each having a capacity of 180 ml, with 20 ml of P2G+AY medium to which 2% (w/v) of acetic acid and 2% (v/v) of ethanol were added put in each of the square plastic containers, and MZ-1061 which had been precultured until OD660nm = 0.2 or more was satisfied inoculated so that the amount thereof became 2% (v/v) of the liquid amount, followed by stationary fermentation for nine days in an incubator set at 30°C.
After completion of step 1, out of 568 g in total of the fermented cellulose-containing fermentation liquid (including liquid and solid matter) obtained from the 30 square plastic containers, only the solid matter was collected and put in a 300 ml beaker, a 200 ml beaker was put thereon, and a load is applied to the 200 ml beaker by a metal weight (weight: 1600 g) to conduct pressurized concentration. The solid content was separated from squeezed liquid after a lapse of 24 hours and 102.3 g of the solid content was collected. The fermented cellulose contents before and after concentration were measured by the method of Reference Example (1).
Subsequently, the concentrated solid content was equally divided into three portions and subjected to crushing processing using Physcotron NS-52 (20000 rpm, 10 sec). The fermentation liquid after crushing processing was subjected to fermentation of step 2. Fermentation was conducted in a shaking incubator set at 30°C (30°C, 120 min$^{-1}$) by putting the fermentation liquid after crushing in a Sakaguchi flask having a capacity of 500 ml and using a medium to which acetic acid and ethanol were added in respective amounts shown in Table 5, and the fermentation was continued until acidity in terms of acetic acid exceeded 5% (w/v). Incidentally, during fermentation of step 2, the ethanol concentration in the fermentation liquid was controlled in the same manner as in Test Example 2.
Acidity in terms of acetic acid in the fermentation liquid was measured by the method described in Reference Example (2) at a time point at which a predetermined time (11 days, 18 days) had passed since fermentation of step 2 started (at the time of completion of fermentation). The contents of fermented cellulose before and after concentration treatment conducted between step 1 and step 2 and the measurement result of acidity in terms of acetic acid at completion of fermentation are shown in Table 5.

[Table 5]

|  | Test section 3-1 | |
| --- | --- | --- |
| Ethanol concentration (at the start of fermentation) (%(v/v)) | 1.0 | |
| Ethanol concentration (control value) (%(v/v)) | 1.0 | |
| Acidity in terms of acetic acid (at the start of fermentation) (%(w/v)) | 1.0 | |
| Fermented cellulose content (before concentration) (%(w/v)) | 0.73 | |
| Fermented cellulose content (after concentration) (%(w/v)) | 4.10 | |
| Fermentation time (day) | 11 | 18 |
| Acidity in terms of acetic acid (at the completion of fermentation) (%(w/v)) | 4.49 | 5.04 |

As shown in Table 5, vinegar in which the content of fermented cellulose increased from 0.73% (w/v) to 4.10% (w/v) and acidity in terms of acetic acid exceeded 4% (w/v) could be prepared through concentration treatment.

(Test Example 4) Study on crushing processing

(1) Preparation of test product (Examples 1 to 3 and Comparative Examples 1 and 2)

A test product in which the cellulose-containing vinegar was further subjected to crushing processing using a homogenizer (Physcotron NS-52) or a sonicator (Sonifier 450) was prepared. Incidentally, in preparing the following test products, vinegar in which alcoholic vinegar (MHV-S manufactured by Mizkan Holdings Co., Ltd.; acidity in terms of acetic acid: 15%) was diluted with deionized water so as to achieve acidity in terms of acetic acid of 5% (w/v) was used as diluent A.

(1-1) Example 1

The fermented cellulose-containing vinegar obtained from test section 1-2 described above (fermented cellulose content: 0.55% (w/v)) was subjected to crushing processing using Physcotron NS-52 (20000 rpm, 30 sec) and subsequently diluted with diluent A so that the content of fermented cellulose became 0.4% (w/v) to prepare vinegar.

(1-2) Example 2

The fermented cellulose-containing vinegar obtained from test section 3-1 described above (fermented cellulose content: 4.10% (w/v)) was subjected to crushing processing using Physcotron NS-52 (20000 rpm, 30 sec) to prepare vinegar.

(1-3) Example 3

The fermented cellulose-containing vinegar obtained from test section 1-2 described above (fermented cellulose content: 0.55% (w/v)) was subjected to crushing processing using Sonifier 450 (output control: 10, duty cycle: Constant, 50 seconds) and subsequently diluted with diluent A so that the content of fermented cellulose became 0.4% to prepare vinegar.

(1-4) Example 4

The vinegar obtained from test section 3-1 described above (fermented cellulose content: 4.1% (w/v)) was subjected to crushing processing using Sonifier 450 (output control: 10, duty cycle: Constant, 50 seconds) to prepare vinegar.

(1-5) Comparative Example 1

Cellulose nanofiber BiNFi-s AFo-10002 (manufactured by Sugino Machine Limited) was diluted with diluent A so that the cellulose content became 0.4% (w/v) and subsequently subjected to crushing processing using Physcotron NS-52 (20000 rpm, 30 sec) to prepare vinegar.

(1-6) Comparative Example 2

San Artist TM (San-Ei Gen F. F. I., Inc.; containing 18.3% (w/v) of CMC-containing fermented cellulose) was diluted with diluent A so that the content of San Artist became 2.18% (w/v) (0.4% (w/v) in terms of fermented cellulose content) and subsequently subjected to crushing processing using Physcotron NS-52 (20000 rpm, 30 sec) to prepare vinegar.

(2) Measurement of transmittance

The vinegar of each of Examples 1 and 3 and Comparative Examples 1 and 2 prepared in (1) was diluted with water so that the fermented cellulose content became 0.1% (w/v), and the transmittance was subsequently measured. Measurement of the transmittance was measured at 20°C and at 500 nm by using UV Spectrophotometer UV-1800 (manufactured by SHIMADZU CORPORATION). Measurement results are shown in Table 6.

[Table 6]

|  | Example 1 | Example 3 | Comparative Example 1 | Comparative Example 2 |
|---|---|---|---|---|
| Fermented cellulose content (%(w/v)) | 0.1 | 0.1 | 0.1 | 0.1 |
| Transmittance (%) | 3.4 | 4.2 | 55.6 | 25.2 |

As shown in Table 6, the transmittance at a wavelength of 500 nm of the vinegar of each of Example 1 and 3 fell within a range of 0.1% or more and 20% or less. On the other hand, the transmittance of the vinegar of each of Comparative Examples 1 and 2 did not fall within the above range, and the transmittance was high.

(3) Particle size distribution measurement

The vinegar of each of Examples 1 and 3 and Comparative Examples 1 and 2 prepared in (1) was diluted with water so that the fermented cellulose content became 0.1% (w/v), and the particle size was subsequently measured. The 90% cumulative particle diameter ($D_{90}$ diameter) was measured by using a laser diffraction particle size distribution analyzer, Microtrac MT3300 EX II system from MicrotracBEL Corp. Deionized water was used as a solvent for measurement. In addition, Data Management System version 2 (DMS2, MicrotracBEL Corp.) was used as measurement application software. At the time of measurement, after the washing button of the measurement application software was pressed down to perform washing, the Set-zero button of the software was pressed down to perform zero adjustment, and a sample was directly charged until an appropriate concentration range was met under sample loading. The sonication button of the software was pressed down to perform sonication at a frequency of 40 kHz and an output of 30 W for three minutes, and deforming treatment was performed three times. Measurement was conducted under the following conditions, and results obtained after performing laser diffraction at a flow rate of 50% for 10 seconds were employed as measured values.

<Measurement conditions>

Display of distribution: volume
Refractive index of particle: 1.60
Refractive index of solvent: 1.3333
Upper limit of measurement ($\mu$m) = 2000.00 $\mu$m
Lower limit of measurement ($\mu$m) = 0.021 $\mu$m.

The measurement results of the $D_{90}$ diameter are shown in Table 7.

[Table 7]

|  | Example 1 | Example 3 | Comparative Example 1 | Comparative Example 2 |
|---|---|---|---|---|
| Fermented cellulose content (%(w/v)) | 0.1 | 0.1 | 0.1 | 0.1 |
| $D_{90}$ diameter ($\mu$m) | 791 | 553 | 182 | 273 |

As shown in Table 7, the $D_{90}$ diameter of the vinegar of each of Example 1 and Example 3 fell within a range of 300 $\mu$m or more and 1000 $\mu$m or less. On the other hand, the $D_{90}$ diameter of the vinegar of each of the Comparative Examples 1 and 2 did not fall within the above range, and the particle diameter was small.

(4) Dynamic viscoelasticity measurement

The vinegar of each of Examples 1 and 3 and Comparative Examples 1 and 2 prepared in (1) was diluted with water so that the fermented cellulose content became 0.1% (w/v), and the dynamic viscoelasticity was subsequently measured. Measurement was conducted by using Modular Compact Rheometer MCR 102 (manufactured by Anton Paar GmbH) under the following conditions. In addition, each sample was slowly dropped using a dropper so as not to break the structure thereof at the time of measurement, and measurement was conducted within a linear region.

<Measurement conditions>

Temperature: 20°C, constant
Control distortion: 0.1%
Geometry: parallel-cone type (diameter: 50 mm, cone angle: 1.0°)
Angular frequency range of measurement: 1 to 100 rad/s

Results of the storage modulus G', as measured at an angular frequency of 1 rad/s and the storage modulus G', as measured at an angular frequency of 10 rad/s of each test product are shown in Table 8.

[Table 8]

|  | Example 1 | Example 3 | Comparative Example 1 | Comparative Example 2 |
|---|---|---|---|---|
| Fermented cellulose content (%(w/v)) | 0.1 | 0.1 | 0.1 | 0.1 |
| Angular frequency (rad/s) | 1 | 1 | 1 | 1 |
| $\alpha$:Storage modulus (Pa) | 138.2 | 14.6 | 0.82 | 0.21 |
| Angular frequency (rad/s) | 10 | 10 | 10 | 10 |
| $\beta$:Storage modulus (Pa) | 167.9 | 16.6 | 1.14 | 0.44 |
| $\beta/\alpha$ | 1.22 | 1.14 | 1.39 | 2.08 |

As shown in Table 8, in the vinegar of each of Examples 1 and 3, the storage modulus G' ($\alpha$), as measured at an angular frequency of 1 rad/s was 10 Pa or more and $10^3$ Pa or less, and the storage modulus G' ($\beta$), as measured at an angular frequency of 100 rad/s was 0.1 times or more and 10 times or less of the storage modulus G' ($\alpha$), as measured at an angular frequency of 1 rad/s. On the other hand, in the vinegar of each of the Comparative Examples 1 and 2, the storage modulus G' ($\alpha$), as measured at an angular frequency of 1 rad/s did not fall within a range of 10 Pa or more and $10^3$ Pa or less.

(Test Example 5) Sensory evaluation (acid taste)

(1) Preparation of test product

The vinegar of Example 2 was diluted with diluent A so as to achieve the fermented cellulose contents shown in Table 9 below to prepare test products a1 to a10. In addition, the vinegar of Comparative Examples 1 and 2 and diluent A were used as test products b1 to b3 without change.

(2) Sensory evaluation test

Sensory evaluation of the test products was carried out with trained sensory inspectors. The following discrimination training A) and B) were conducted, and persons who performed particularly well in the training and had rich experience in food development were selected as the sensory inspectors.
A) Taste quality discrimination test in which an aqueous solution is prepared for each of five basic tastes (sweet taste: taste of sugar, acid taste: taste of tartaric acid, *umami* taste: taste of sodium glutamate, saline taste: taste of sodium chloride, and bitter taste: taste of caffeine) at a concentration close to the threshold of each component, and the samples of respective tastes are correctly discriminated from seven samples in total including the five aqueous solutions and two distilled water samples.
B) Concentration difference discrimination test in which concentration differences among five kinds of sodium chloride aqueous solution and acetic acid aqueous solution having slightly different concentrations are correctly discriminated.

Sensory evaluation with respect to "perception of acid taste" of test products (undiluted solution) was carried out in accordance with the following criteria with a total of six sensory inspectors selected according to the above discrimination training. In calculating the score, a weighted average was calculated from the evaluation scores obtained from the six inspectors, the obtained value was rounded down to the nearest integer, and a score of 3 points or more was regarded as an acceptable score.

<Evaluation of acid taste>

5: Preferable as acid taste is significantly suppressed.
4: Preferable as acid taste is suppressed.
3: Acid taste is slightly suppressed.
2: Acid taste is minimally suppressed.

1: Acid taste is not suppressed at all.

Results are shown in Table 9.

[Table 9]

| | Type of cellulose | Cellulose content (% (w/v)) | Perception of acid taste (undiluted solution) |
|---|---|---|---|
| Test product a1 | Fermented cellulose | 0.025 | 2 |
| Test product a2 | Fermented cellulose | 0.05 | 4 |
| Test product a3 | Fermented cellulose | 0.08 | 4 |
| Test product a4 | Fermented cellulose | 0.1 | 5 |
| Test product a5 | Fermented cellulose | 0.25 | 5 |
| Test product a6 | Fermented cellulose | 0.5 | 5 |
| Test product a7 | Fermented cellulose | 0.8 | 5 |
| Test product a8 | Fermented cellulose | 1.0 | 5 |
| Test product a9 | Fermented cellulose | 2.0 | 5 |
| Test product a10 | Fermented cellulose | 4.1 | 5 |
| Test product b1 | Plant-derived cellulose | 0.4 | 1 |
| Test product b2 | Fermented cellulose (containing CMC) | 0.4 | 2 |
| Test product b3 | None | 0 | 1 |

As shown in Table 9, acid taste was sufficiently suppressed in test products a2 to a10 in which the fermented cellulose content in the vinegar was 0.05% (w/v) or more.

(Test Example 6) Evaluation of dispersion stability and appearance

(1) Preparation of test product

The vinegar of Example 2 was diluted with diluent A so as to achieve the fermented cellulose contents shown in Table 10 below to prepare test products a11 to a17. Further, the liquid content of the vinegar of Example 2 was partly removed to prepare test product a19 in which the fermented cellulose content in the vinegar increased. In addition, the vinegar of Example 2 was used as test product a18 without change, and the vinegar of Comparative Examples 1 and 2 and diluent A were used as test products b1 to b3 without change.

(2) Evaluation of dispersion stability

The vinegar of each test product was diluted to five times with deionized water, and 0.3 g of yellow mustard seeds were subsequently added to 10 ml of the specimen as ingredients followed by sufficient stirring. Then, dispersion stability of the ingredients in liquid after being left to stand for 10 minutes was evaluated on a five-level scale in accordance with the following criteria (a score of 3 points or more was regarded as an acceptable score).

<Dispersion stability>

5: Ingredients are homogeneously dispersed in liquid.
4: Ingredients are almost homogeneously dispersed in liquid.
3: Ingredients are inhomogeneously dispersed in liquid.
2: Ingredients are slightly dispersed in liquid.
1: Ingredients are not dispersed in liquid.

(3) Evaluation of appearance (fibrous texture and white turbidity)

The vinegar of each test product was diluted to five times with deionized water, and the appearance thereof was then visually evaluated on a five-level scale in accordance with the following criteria (a score of 3 points or more was regarded as an acceptable score).

<Evaluation of appearance>

5: Natural fibrous texture and white turbidity are significantly observed.
4: Natural fibrous texture and white turbidity are clearly observed.
3: Natural fibrous texture and white turbidity are observed.
2: Natural fibrous texture and white turbidity are slightly observed.
1: No natural fibrous texture or white turbidity.

(4) Evaluation results

Evaluation results of dispersion stability and fibrous texture/white turbidity are shown in Table 10.

[Table 10]

| | Type of cellulose | Cellulose content (% (w/v)) | Dispersion stability (solution diluted to five times) | Fibrous texture/ white turbidity (solution diluted to five times) |
|---|---|---|---|---|
| Test product a11 | Fermented cellulose | 0.05 | 1 | 1 |
| Test product a12 | Fermented cellulose | 0.125 | 1 | 5 |
| Test product a13 | Fermented cellulose | 0.25 | 1 | 5 |
| Test product a14 | Fermented cellulose | 0.35 | 4 | 5 |
| Test product a15 | Fermented cellulose | 0.5 | 5 | 5 |
| Test product a16 | Fermented cellulose | 1.25 | 5 | 5 |
| Test product a17 | Fermented cellulose | 2.5 | 5 | 5 |
| Test product a18 | Fermented cellulose | 4.1 | 5 | 4 |

(continued)

| | Type of cellulose | Cellulose content (% (w/v)) | Dispersion stability (solution diluted to five times) | Fibrous texture/ white turbidity (solution diluted to five times) |
|---|---|---|---|---|
| Test product a19 | Fermented cellulose | 5.0 | 1*) | 1 |
| Test product b1 | Plant-derived cellulose | 0.4 | 1 | 1 |
| Test product b2 | Fermented cellulose (containing CMC) | 0.4 | 2 | 1 |
| Test product b3 | None | 0 | 1 | 1 |
| *) Not preferable as physicality of the diluted solution is too hard | | | | |

As shown in Table 10, ingredients were homogeneously dispersed, the liquid was fluent, and fibrous texture and white turbidity were sufficient in test products a14 to a18 in which the content of fermented cellulose in the vinegar was 0.35% or more and 4.1% or less. On the other hand, either one or both of dispersion stability of ingredients and fibrous texture/white turbidity were unacceptable scores and not sufficient in test products a11 to a13 and a19 in which the content of fermented cellulose in the vinegar did not fall within a range of 0.35% or more and 4.1% or less. In addition, in test products b1 and b2 containing plant-derived cellulose, fermented cellulose (containing CMC), while the cellulose content in the vinegar fell within the above range, both of dispersion stability of ingredients and fibrous texture/white turbidity were unacceptable scores and not sufficient.

When the results of Test Example 5 and Test Example 6 were comprehensively evaluated, it has been confirmed that the vinegar containing fermented cellulose, which contains no CMC, in a range of 0.32% (w/v) or more and 4.5% (w/v) or less scores 3 points or more for every evaluation item, has dispersion stability, suppresses perception of acid taste, and has natural fibrous texture and white turbidity.

Industrial Applicability

The present invention can be utilized in the field of manufacturing vinegar and vinegar-containing food and drink.

All publications, patents, and patent applications cited in the present description are incorporated herein by reference in their entirety.

**Claims**

1. A method of producing vinegar containing fermented cellulose and acetic acid, the method comprising: step 1 of conducting fermentation allowing an acetic acid bacterium to mainly produce fermented cellulose under fermentation condition (A) below; and step 2 of conducting fermentation allowing the acetic acid bacterium to mainly produce acetic acid under fermentation condition (B) below:

   fermentation condition (A): acidity X in terms of acetic acid and ethanol concentration Y in a medium at the start of fermentation satisfy formula (I) below:

$$0 < X + Y < 4.0 \quad (I)$$

   wherein X represents acidity in terms of acetic acid (% (w/v)), and Y represents ethanol concentration (% (v/v)); and

   fermentation condition (B): ethanol concentration in fermentation liquid is controlled during fermentation to be more than 0% (v/v) and less than 4% (v/v).

2. The method of producing vinegar according to claim 1, wherein a content of the acetic acid is 4% (w/v) or more and 20% (w/v) or less relative to acidity in terms of acetic acid.

3. The method of producing vinegar according to claim 1 or 2, wherein a content of the fermented cellulose is 0.32% (w/v) or more and 4.5% (w/v) or less relative to dry weight.

4. The method of producing vinegar according to any one of claims 1 to 3, wherein the vinegar comprises bacterial cells of the acetic acid bacterium.

5. The method of producing vinegar according to any one of claims 1 to 4, further comprising a step of concentrating fermented cellulose between the step 1 and the step 2.

6. The method of producing vinegar according to any one of claims 1 to 5, further comprising a step of crushing fermented cellulose so that the fermented cellulose in the vinegar satisfies requirements below:

(a) a transmittance of a liquid in which a content of fermented cellulose is adjusted to be 0.1% (w/v) (dry weight) by diluting the vinegar is 0.1% or more and 20% or less at a wavelength of 500 nm; and
(b) a 90% cumulative particle diameter ($D_{90}$ diameter), as measured by a laser diffraction particle size distribution analyzer, of fermented cellulose in a liquid in which a content of fermented cellulose is adjusted to be 0.1% (w/v) (dry weight) by diluting the vinegar is 300 $\mu$m or more and 1000 $\mu$m or less.

7. The method of producing vinegar according to any one of claims 1 to 6, further comprising a step of crushing fermented cellulose so that fermented cellulose in the vinegar satisfies requirements below:

(c) a storage modulus G', as measured by dynamic viscoelasticity measurement at a temperature of 20°C and an angular frequency of 1 rad/s, of a liquid in which a content of fermented cellulose is adjusted to be 0.1% (w/v) (dry weight) by diluting the vinegar is 10 Pa or more and $10^3$ Pa or less; and
(d) a storage modulus G', as measured by dynamic viscoelasticity measurement at a temperature of 20°C and an angular frequency of 10 rad/s, of a liquid in which a content of fermented cellulose is adjusted to be 0.1% (w/v) (dry weight) by diluting the vinegar is 0.1 times or more and 10 times or less of a storage modulus G', as measured at a temperature of 20°C and an angular frequency of 1 rad/s.

8. The method of producing vinegar according to any one of claims 1 to 7, wherein the vinegar contains no carboxymethyl cellulose.

9. Vinegar containing fermented cellulose and acetic acid, wherein a content of the fermented cellulose is 0.32% (w/v) or more and 4.5% (w/v) or less relative to dry weight, and a content of the acetic acid is 4% (w/v) or more and 20% (w/v) or less relative to acidity in terms of acetic acid.

10. The vinegar according to claim 9, comprising bacterial cells of an acetic acid bacterium.

11. The vinegar according to claim 9 or 10, wherein the fermented cellulose in the vinegar is dispersed therein so as to satisfy requirements below:

(a) a transmittance of a liquid in which a content of fermented cellulose is adjusted to be 0.1% (w/v) (dry weight) by diluting the vinegar is 0.1% or more and 20% or less at a wavelength of 500 nm; and
(b) a 90% cumulative particle diameter ($D_{90}$ diameter), as measured by a laser diffraction particle size distribution analyzer, of fermented cellulose in a liquid in which a content of fermented cellulose is adjusted to be 0.1% (w/v) (dry weight) by diluting the vinegar is 300 $\mu$m or more and 1000 $\mu$m or less.

12. The vinegar according to any one of claims 9 to 11, wherein the fermented cellulose in the vinegar is dispersed therein so as to satisfy requirements below:

(c) a storage modulus G', as measured by dynamic viscoelasticity measurement at a temperature of 20°C and an angular frequency of 1 rad/s, of a liquid in which a content of fermented cellulose is adjusted to be 0.1% (w/v) (dry weight) by diluting the vinegar is 10 Pa or more and $10^3$ Pa or less; and
(d) a storage modulus G', as measured by dynamic viscoelasticity measurement at a temperature of 20°C and an angular frequency of 100 rad/s, of a liquid in which a content of fermented cellulose is adjusted to be 0.1% (w/v) (dry weight) by diluting the vinegar is 0.1 times or more and 10 times or less of a storage modulus G', as measured at a temperature of 20°C and an angular frequency of 1 rad/s.

**13.** The vinegar according to any one of claims 9 to 12, containing no carboxymethyl cellulose.

**14.** Vinegar-containing food and drink comprising vinegar produced by the production method according to any one of claims 1 to 8.

**15.** Vinegar-containing food and drink comprising the vinegar according to any one of claims 9 to 13.

**16.** A method for reducing acid taste of vinegar, comprising: in vinegar containing fermented cellulose and acetic acid, setting a content of the fermented cellulose to 0.32% (w/v) or more and 4.5% (w/v) or less relative to dry weight; and setting a content of the acetic acid to 4% (w/v) or more and 20% (w/v) or less relative to acidity in terms of acetic acid.

## INTERNATIONAL SEARCH REPORT

| International application No. |
|---|
| PCT/JP2019/025520 |

**A. CLASSIFICATION OF SUBJECT MATTER**
Int.Cl. C12J1/04(2006.01)i

According to International Patent Classification (IPC) or to both national classification and IPC

**B. FIELDS SEARCHED**

Minimum documentation searched (classification system followed by classification symbols)
Int.Cl. C12J1/04

Documentation searched other than minimum documentation to the extent that such documents are included in the fields searched
Published examined utility model applications of Japan        1922–1996
Published unexamined utility model applications of Japan      1971–2019
Registered utility model specifications of Japan              1996–2019
Published registered utility model applications of Japan      1994–2019

Electronic data base consulted during the international search (name of data base and, where practicable, search terms used)
JSTPlus/JMEDPlus/JST7580 (JDreamIII), CAplus/MEDLINE/EMBASE/BIOSIS (STN), WPIDS/WPIX (STN), FSTA (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2005-27535 A (JAPAN SCIENCE AND TECHNOLOGY AGENCY) 03 February 2005, paragraphs [0019]-[0027] (Family: none) | 1-5,8-10,13-16<br>6,7,11,12 |
| A | JP 8-291103 A (AGENCY OF INDUSTRIAL SCIENCE AND TECHNOLOGY) 05 November 1996, paragraphs [0002]-[0004] (Family: none) | 1-16 |

☒ Further documents are listed in the continuation of Box C.        ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 06 September 2019 (06.09.2019) | 17 September 2019 (17.09.2019) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

International application No.

PCT/JP2019/025520

C (Continuation).   DOCUMENTS CONSIDERED TO BE RELEVANT

| Category* | Citation of document, with indication, where appropriate, of the relevant passages | Relevant to claim No. |
|---|---|---|
| A<br><br>A | JEONG, Y. -J. et al., "Study on the simultaneous production of the bacterial cellulose and vinegar by Gluconacetobacter persimmonis KJ145$^T$", Journal of the Korean Society of Food Science and Nutrition, 2003, vol. 32, no. 7, pp. 981-985, entirety, in particular, abstract, page 982, fig. 2 | 1-16 |
| X | 編集部，平成13年度味噌・食酢の研究業績，　日本醸造協会誌，2002, vol. 97, no. 5, pp. 338-366, pp. 351-352, non-official translation (Editorial department, "Research achievement of miso and vinegar in 2001", JOURNAL OF THE BREWING SOCIETY OF JAPAN) | 1-16 |
| A | WO 2008/12912 A1 (MITSUKAN GROUP HONSHA KK) 31 January 2008, entirety, in particular, claims, examples (Family: none) | 1-5,8-10,13-16<br>6,7,11,12 |
| A | JP 2005-295826 A (SANEI GEN FFI INC.) 27 October 2005 (Family: none) | 1-16 |

Form PCT/ISA/210 (continuation of second sheet) (January 2015)

**EP 3 819 365 A1**

**REFERENCES CITED IN THE DESCRIPTION**

**Patent documents cited in the description**

- WO 2014104318 A
- JP 11178516 A
- JP 2009278970 A
- JP 10215793 A
- JP 2004089119 A
- JP 2018126158 A